**Europäisches Patentamt**

**European Patent Office**

**Office européen des brevets**

(19)

(11) Numéro de publication: **0 123 597**
**B1**

(12) ## FASCICULE DE BREVET EUROPEEN

(45) Date de publication du fascicule du brevet:
**27.01.88**

(51) Int. Cl.⁴: **G 21 C 17/06**

(21) Numéro de dépôt: **84400695.7**

(22) Date de dépôt: **09.04.84**

(54) **Machine d'examen d'un assemblage combustible de réacteur nucléaire.**

(30) Priorité: **13.04.83 FR 8306027**

(43) Date de publication de la demande:
**31.10.84 Bulletin 84/44**

(45) Mention de la délivrance du brevet:
**27.01.88 Bulletin 88/4**

(84) Etats contractants désignés:
**BE DE GB IT NL SE**

(56) Documents cités:
**FR - A - 2 304 149**
**FR - A - 2 395 571**
**US - A - 3 621 580**

**KERNTECHNIK, vol. 19, no. 3, 1977, pages 110-116; B.J. SELIG: "Nuclear systems inspection services"**

(73) Titulaire: **COMMISSARIAT A L'ENERGIE ATOMIQUE, 31/33, rue de la Fédération, F-75015 Paris (FR)**

(72) Inventeur: **Coppa, Louis, Parc Aurélia 3 Avenue Val Saint André, F-13100 Aix en Provence (FR)**
Inventeur: **Mengual, Christian, La Trinique d'Isnard Bât.D Allée de la Ponsonne, F-04100 Manosque (FR)**
Inventeur: **Ripart, Alain, 21, rue de la Roseraie, F-92360 Meudon la Foret (FR)**
Inventeur: **Zava, Francis, Les Hespérides Allée de la Ponsonne, F-04100 Manosque (FR)**

(74) Mandataire: **Mongrédien, André et al, c/o BREVATOME 25, rue de Ponthieu, F-75008 Paris (FR)**

## Description

L'invention concerne une machine d'examen pour assemblage combustible de réacteur nucléaire comportant un platelage, des moyens de support pour un assemblage à examiner, ces moyens de support maintenant ledit assemblage en position verticale, des moyens d'examen de l'assemblage, et des moyens pour déplacer lesdits moyens d'examen, lesdits moyens de déplacement des moyens d'examen comprenant une colonne s'étendant verticalement et reposant sur le platelage, ladite colonne portant une console déplaçable verticalement le long de la colonne, ladite console supportant un chariot déplaçable transversalement par rapport à la console.

Un assemblage combustible de réacteur nucléaire, en particulier de réacteur refroidi à l'eau, est constitué par un grand nombre d'aiguilles ou crayons combustibles et/ou fertiles gainées maintenues en un faisceau parallèle, par une structure rigide de maintien composée de deux pièces d'extrémité, respectivement une pièce d'extrémité supérieure et une pièce d'extrémité inférieure, reliées entre elles par des tiges métalliques. Ces assemblages sont disposés dans le cœur du réacteur entre deux plaques, une plaque inférieure et une plaque supérieure.

Il est nécessaire de vérifier ces assemblages combustibles, notamment pour déceler d'éventuelles déformations des crayons et/ou de la structure de maintien, et également pour déceler en temps voulu les risques de fissuration. Lors de l'arrêt du réacteur, certains assemblages qui ont fonctionné sous pression et à haute température sont déchargés et transférés à l'aide de moyens de manutention appropriés vers une machine d'examen qui permet de les vérifier.

De manière générale, une machine d'examen d'assemblage combustible comporte un support sur lequel l'assemblage à examiner est positionné verticalement et des moyens d'examen de l'assemblage, qui peuvent être déplacés par rapport à ce dernier, en général selon trois axes orthogonaux.

A titre d'exemple, le brevet français FR-A 2 298 859 «Appareil et installation d'examen des barreaux combustibles d'un réacteur nucléaire» décrit une machine de ce type. Elle comporte trois chariots mobiles, le premier en déplacement vertical sur des glissières parallèles aux crayons combustibles de l'assemblage, le deuxième en déplacement horizontal sur des glissières portées par le premier chariot et le troisième en déplacement horizontal perpendiculaire au précédent. Les moyens d'examens, constitués par un endoscope porté par le troisième chariot, peuvent ainsi être déplacés selon trois directions perpendiculaires.

On connaît également du US-A-3 621 580 une machine d'examen pour assemblage combustible de réacteur nucléaire.

La machine comporte un socle B, une colonne C montée à une extrémité du socle et une plate-forme D fixée à l'extrémité de la plate-forme opposée à celle de la colonne. La plate-forme D peut être rotative. Des moyens 22 permettent de l'entraîner en rotation. Les moyens d'examen peuvent être déplacés verticalement le long de la colonne C.

Toutefois, un inconvénient de ces machines d'examen est de ne pas permettre un recul suffisant des moyens d'examen.

En effet, dans le cas de la machine d'examen décrite dans le FR-A-2 298 859 précité, les possibilités de recul des moyens d'examen sont limitées par les dimensions du premier chariot. Ces dimensions pourraient certes être augmentées mais cela aurait pour inconvénient d'augmenter simultanément le poids et le porte à faux de ce dernier. En outre, les moyens de déplacement des moyens d'examen ne constituent pas un ensemble facilement démontable qui peut être remplacé en cas de besoin. La machine d'examen de l'invention remédie à ces inconvénients.

Par conséquent, l'invention a pour objet une machine d'examen d'un assemblage combustible qui autorise des déplacements d'une grande amplitude.

Ce problème est résolu par le fait que ladite colonne est solidaire d'un chariot qui est déplaçable sur ledit platelage, ce qui permet d'éloigner ou de rapprocher la colonne de l'assemblage à examiner.

Cette caractéristique permet d'adapter l'invention à divers travaux en raison de sa capacité de déplacement: ces travaux peuvent être l'examen avec une caméra, des mesures spécifiques avec des appareillages spécialement conçus tels que des dispositifs de mesure à ultrasons, à courants de Foucault ou utilisant des lasers. On peut également adapter éventuellement un dispositif d'usinage, par exemple de perçage ou de fraisage.

Par ailleurs, l'invention concerne une machine d'examen pour assemblage combustible de réacteur nucléaire comportant un platelage, des moyens de support pour un assemblage à examiner, ces moyens de support maintenant ledit assemblage en position verticale, des moyens d'examen de l'assemblage, et des moyens pour déplacer lesdits moyens d'examen, une chaise située à une extrémité du platelage, un pot tournant autour de son axe vertical recevant l'assemblage, deux structures rigides qui sont disposées verticalement et parallèlement sur la chaise, chacune desdites structures ayant une extrémité inférieure et une extrémité supérieure, les structures reposant sur la chaise par leur extrémité inférieure, des moyens de liaison étant prévus entre l'extrémité supérieure desdites structures. A titre d'exemple FR-A-2 304 149 décrit une machine de ce type.

Egalement le document US-A-3 621 580 décrit une machine d'examen de ce type. Dans cette machine, l'assemblage combustible à examiner repose en position verticale sur un support mobile en rotation au moyen d'un volant actionnable manuellement. L'assemblage est maintenu à sa partie supérieure par une pièce qui peut être fixée à une hauteur convenable sur la colonne qui supporte les moyens d'examen.

Une telle machine permet de faire tourner l'assemblage. Mais elle ne permet pas de l'immobiliser à des positions caractéristiques définies avec précision en le faisant tourner degré par degré. D'autre part, l'assemblage n'est pas maintenu exactement dans la position qu'il occupait lorsqu'il était encore dans le cœur du réacteur.

La machine d'examen de l'invention permet d'apporter une solution à ces problèmes par un tourniquet situé à la partie supérieure desdites structures rigides, ce tourniquet comportant une grande branche et une petite branche, la petite branche étant montée de manière pivotante sur la grande branche, deux broches situées chacune à une extrémité de la grande branche, deux broches situées chacune à une extrémité de la petite branche, un bloc de fixation comportant un orifice destiné à recevoir une broche de la grande branche étant prévu à la partie supérieure de chacune des structures rigides, un disque solidaire de la petite branche comportant des trous répartis à des positions caractéristiques, un dispositif d'immobilisation en rotation de la petite branche par rapport à la grande branche.

D'autres caractéristiques et avantages de l'invention apparaîtront encore à la lecture de la description qui suit d'un exemple de réalisation donné à titre indicatif et non limitatif en référence aux figures annexées sur lesquelles:

- la fig. 1 est une vue générale en perspective de la machine d'examen d'assemblage combustible de l'invention,
- la fig. 2 est une vue en coupe d'une partie de la structure de support de l'assemblage combustible,
- la fig. 3 est une vue de détail montrant le tourniquet,
- la fig. 4 est une vue latérale de la partie supérieure de la machine de l'invention montrant les structures de maintien des assemblages et les moyens de déplacement des moyens d'examen,
- la fig. 5 est une vue de dessus de la machine d'examen de l'invention.

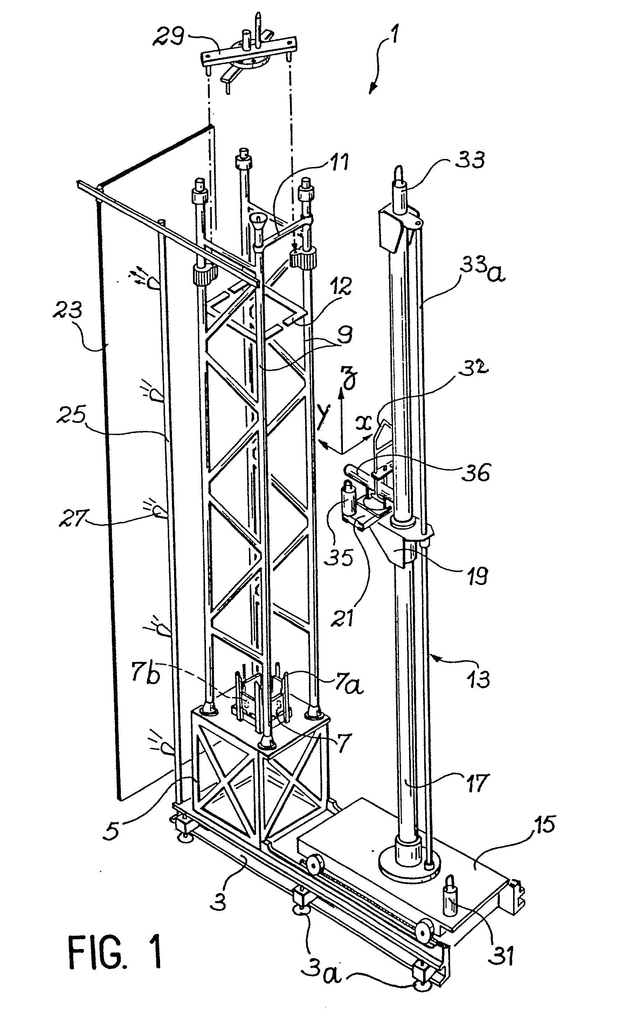

Sur la fig. 1, on a représenté une vue générale en perspective de la machine d'examen combustible de l'invention. Elle comporte un platelage 3 reposant sur le fond de la piscine, une chaise 5 située à une extrémité du platelage 3, un pot tournant 7 recevant la boîte à eau 85 de l'assemblage qui est partie intégrante de la base de l'assemblage et que l'on appellera dans la suite du texte «pied de l'assemblage». Deux structures planes 9 reposent sur la chaise 5. Les structures 9 sont verticales et parallèles et disposées de part et d'autre de l'assemblage combustible. Elles sont constituées de tubes verticaux et parallèles reliés entre eux par une structure triangulée. Elles sont reliées à leur extrémité supérieure par une barre 11. Le platelage 3 de la chaise 5, le pot 7 et les structures 9 font partie des moyens de support de l'assemblage combustible à examiner. Ce dernier est disposé sur le pot 7 en vue de son examen.

La machine de l'invention comporte en outre des moyens d'examen de l'assemblage. Ces moyens ne font pas partie de l'invention proprement dite. Ils peuvent être constitués de manière classique par une caméra de télévision par exemple. En revanche, les moyens de déplacement des moyens d'examen, constituent une caractéristique de la présente invention. Ces moyens de déplacement, désignés par la référence générale 13, sont constitués par un chariot 15 mobile sur le platelage 3, une colonne 17 solidaire du chariot mobile 15, une console 19 déplaçable verticalement le long de la colonne 17, et par un chariot 21 déplaçable transversalement sur la console 19. Les moyens d'examen proprement dits sont fixés sur le chariot transversal 21. La machine comporte également un écran 23 et deux rampes d'éclairage 25 sur lesquelles sont fixés des projecteurs 27.

En partie haute, les structures 9 comportent deux fourchettes de sécurité 12 escamotables destinées au maintien en position de l'assemblage combustible pendant sa mise en place.

Les structures latérales 9 supportent encore un tourniquet 29 qui a pour but de maintenir la partie supérieure de l'assemblage combustible.

Dans l'exemple de réalisation décrit, l'assemblage combustible est un assemblage 17×17, c'est-à-dire un assemblage de section carrée dont chaque côté comporte 17 crayons combustibles.

La mise en place de l'assemblage s'effectue de la manière suivante:

L'assemblage est suspendu au moyen d'une pince fixée à sa pièce d'extrémité supérieure. On le retire ainsi du rack de stockage et on l'amène à une hauteur qui permet de garantir une épaisseur d'eau suffisante au-dessus de l'assemblage pendant le chargement de la machine d'examen. Dans l'exemple de réalisation décrit, l'assemblage est soulevé de manière que sa base soit à un mètre du fond de la piscine. On lève les fourchettes de sécurité 12 et on fait pivoter l'écran 23 si nécessaire. Le pot tournant 7 comporte des broches 7a qui permettent de prépositionner le pied de l'assemblage. Un positionnement plus précis est permis grâce aux broches 7b. On amène l'assemblage à poste en le descendant et on le pose sur le pot tournant. On abaisse les fourchettes de sécurité 12 et on désolidarise la pince de l'assemblage. A l'aide d'une pince, on pose le tourniquet 29 sur les structures latérales 9 et on s'assure de la position des broches du tourniquet dans la pièce d'extrémité supérieure de l'assemblage. On dégage la pince du tourniquet. A partir de ce moment, l'assemblage combustible est maintenu et centré en partie basse par les broches 7b du pot tournant et en partie haute par les broches du tourniquet. On peut donc relever sans risque les fourchettes de sécurité 12, ce qui permet la rotation de l'assemblage et son examen sur toute sa hauteur.

Comme on peut le voir sur la fig. 1, les moyens de déplacement des moyens d'examen 13 comportent un moteur 31 et un codage solidaires du chariot 15 qui assure le mouvement longitudinal de ce dernier. Un moteur 33 et son codage assurent le mouvement vertical de la console 19. Une colonne de guidage 33a maintient l'orientation de la console 19. Un contrepoids, non visible sur la fig. 1, est situé à l'intérieur de la colonne 17 qui est creuse et sert à équilibrer le poids de la console supportant le chariot transversal 21 et les moyens d'examen. Un moteur 35 et son codage assurent le mouvement latéral du chariot transversal 21. Un support 32 permet la fixation des moyens d'examen par exemple une caméra de télévision 36 et de projecteurs orientables et démontables. Ces moteurs 31, 33 et 35 sont démontables à distance. En cas d'incident la commande des trois mouvements peut se faire manuellement et à distance.

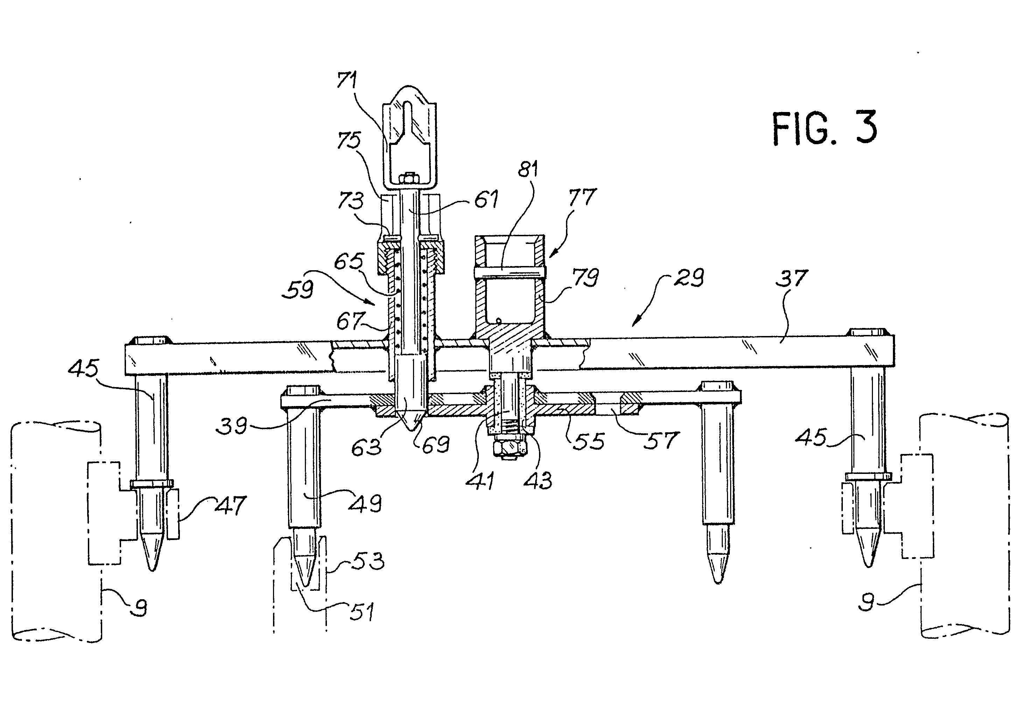

Le platelage 3 comporte six vérins 3a qui permettent sa mise à niveau par rapport au fond de la piscine sur laquelle il repose. Sur la fig. 3, on a représenté plus en détail le tourniquet 29 qui est constitué par une grande branche 37 et une petite branche 39. Ces deux branches sont assemblées l'une à l'autre de manière pivotante comme on peut le voir sur la fig. 1. Un axe 41 est fixé à la grande branche 37. La petite branche 39 comporte une bague 43 qui tourillonne autour de l'axe 41. Par ailleurs, la grande branche 37 comporte à ses deux extrémités deux broches 45 prévues pour s'adapter sur un étrier de support 47 représenté en traits mixtes, qui est lui-même solidaire du montant longitudinal des structures latérales 9, également représentées en traits mixtes sur la figure 3.

La petite branche 39 possède deux broches 49 fixées à ses extrémités. Les broches 49 sont prévues pour s'adapter dans deux orifices de positionnement diagonalement opposés de la pièce d'extrémité supérieure 53 de l'assemblage combustible figuré en traits mixtes sur la fig. 3. En outre, un disque 55 est fixé à la branche 39. Ce disque comporte des trous de positionnement répartis sur un cercle, situés par exemple à 45° les uns des autres. Un mécanisme 59 solidaire de la branche 37 permet l'immobilisation de la petite branche 39 à ses positions caractéristiques qui correspondent à une orientation déterminée de l'assemblage combustible par rapport aux moyens d'examen. Dans l'exemple de réalisation décrit, le mécanisme 59 est constitué par une tige 61 présentant à son extrémité inférieure une partie de plus grand diamètre 63 raccordée à la partie 51 par un épaulement sur lequel vient prendre appui un ressort de rappel 65. Le ressort 65 est disposé dans un tube 67 qui sert pour le guidage de la tige 61. A son extrémité inférieure, la tige 61 présente une partie conique 69 qui favorise sa pénétration dans les orifices 57 du disque perforé 55 solidaire de la branche 39. Un anneau 71 est fixé à l'extrémité supérieure de la tige 61 par exemple au moyen d'une vis comme représenté sur la fig. 3. On peut, au moyen d'un crochet pénétrant dans l'anneau 71, venir soulever la tige 61, ce qui libère en rotation le disque 55 et par conséquent la branche 39 solidaire de l'assemblage combustible. Deux ergots 73 fixés à la tige 61 permettent de l'immobiliser en position relevée en la faisant pivoter de manière à faire pénétrer les ergots 73 dans une fente circonférentielle de la pièce 75 qui constitue un bouchon qui ferme le tube 67.

Le tourniquet 29 comprend encore un embout de fixation 77 pour la pince de manutention. Dans l'exemple décrit, cet embout est constitué par un tube 79 soudé à la branche 37 et traversé diamétralement par un axe 81 qui permet la fixation d'un dispositif de type à baïonnette.

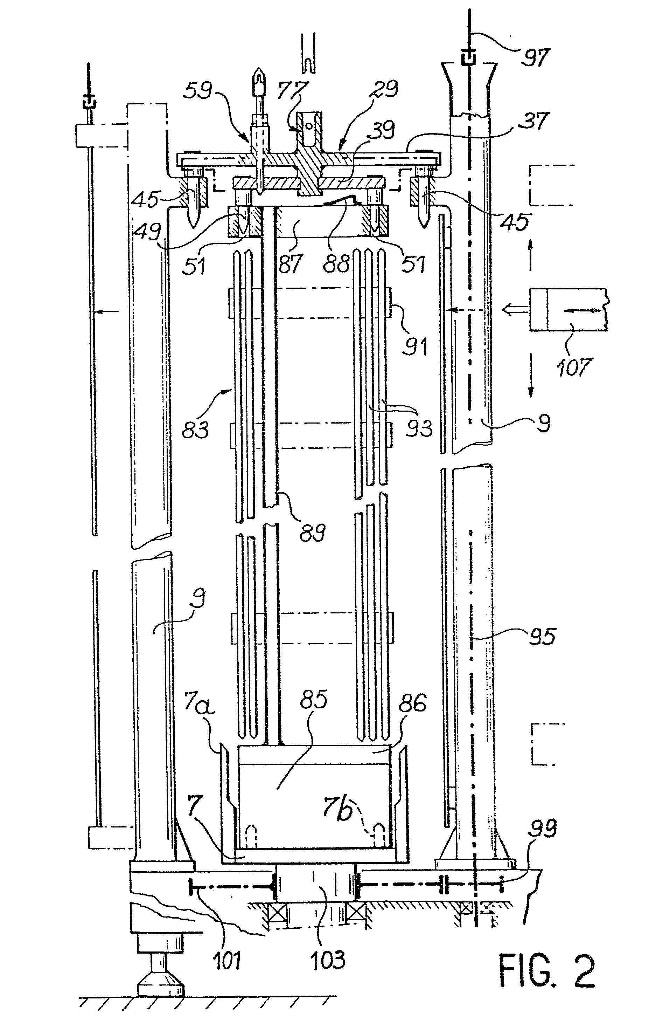

Sur la fig. 2, on a représenté une vue en coupe de la structure de support de l'assemblage combustible qui montre en particulier les moyens permettant d'entraîner en rotation le pot tournant afin de permettre l'examen de l'assemblage sous toutes ses faces.

Sur cette figure, l'assemblage combustible est désigné par la référence 83. De manière classique, il est constitué de deux pièces d'extrémité rigides, une pièce d'extrémité inférieure 86 et une pièce d'extrémité supérieure 87 fixée à chaque extrémité de tubes guides rigides 89 dont un seule été représenté sur la fig. 2. Sur les tubes guides sont disposées plusieurs grilles d'espacement 91 qui maintiennent un faisceau de crayons combustibles 93.

Des assemblages de ce type sont disposés lorsqu'ils sont en placé dans le cœur du réacteur entre une plaque supérieure et une plaque inférieure de cœur qui font partie de la charpente aménagée dans la cuve du réacteur. Afin de permettre leur fixation entre les plaques supérieure et inférieure de la structure du cœur, les pièces d'extrémité 85 et 87 comportent des orifices de positionnement 51.

On reconnaît par ailleurs sur la fig. 2 le tourniquet 29 avec la grande branche 37, la petite branche 39, le dispositif 59 d'immobilisation en rotation de la petite branche par rapport à la grande et le dispositif de fixation 77 de la pince de manutention. Les broches 45, de la grande branche 37 pénètrent dans des orifices de fixation correspondants prévus sur les membrures des structures latérales 9.

La pièce d'extrémité supérieure 87 comporte en outre un élément élastique désigné par la référence 88 qui repousse l'assemblage 83 contre la plaque inférieure de cœur à l'encontre du courant d'eau de réfrigération qui le parcourt de bas en haut.

La boîte à eau 85 de la pièce d'extrémité inférieure 86 de l'assemblage combustible 83 est fixée dans les broches 7b du pot tournant 7.

Le pot tournant 7 permet une rotation quart de tour par quart de tour autour de son axe vertical de l'assemblage 83, ce qui permet de l'examiner successivement sous chacune de ses faces. On peut également immobiliser l'assemblage dans des positions caractéristiques correspondant aux orifices du disque 55 du tourniquet 29. Ces positions caractéristiques peuvent correspondre par exemple à un angle de 45°.

L'assemblage combustible est entraîné en rotation par le pot tournant 7 uniquement, le tourniquet 29 étant libre en rotation. Le pot 7 est commandé par une pignonnerie 95 dont la commande manuelle 97 est reportée en haut des montants de la structure 9. La rotation degré par degré de l'assemblage peut être figée à tout instant pour l'examen sous un angle quelconque ou indexé dans des positions caractéristiques, tous les 45° par exemple. Comme on peut le voir sur la fig. 2, la pignonnerie est constituée par une première tige 95 disposée verticalement à l'intérieur d'un montant de la structure 9, par un pignon denté 99 entraînant une couronne dentée 101 qui entraîne un axe 103 et un pot tournant 7 auquel il est lié.

Afin de mesurer la déformation des ressorts, on applique une fois le tourniquet retiré 29 une plaque (non représentée) possédant une masse égale à l'action exercée par la plaque supérieure de cœur sur les ressorts 88 de la pièce d'extrémité supérieure 87 lorsque l'assemblage est en place dans les structures du cœur du réacteur. Ceci permet de simuler l'écrasement des ressorts 88. Les contraintes supportées par la structure de l'assemblage 83 pendant les mesures sont donc identiques à celles qui existent lorsqu'il est mis en place dans le cœur. Les mesures réalisées par un moyen de mesure 107 schématiquement représenté sur la fig. 2 sont donc aussi proches que possible de la réalité.

Cette plaque prend appui sur les structures 9 par quatre tenons s'encastrant dans les orifices présentés par ces pièces. On évalue la déformation globale des quatre ressorts 88 en mesurant la flèche de chacun des côtés de la plaque. Il serait possible de connaître la déformation de chaque ressort en appliquant un poids sur chacun d'eux.

Le système tourniquet 29-pot tournant 7 assure un parfait maintien en verticabilité de l'assemblage 83 et le place dans des conditions favorables pour les examens demandés. L'exécution de ces derniers est en outre simplifiée par l'absence d'obstacles sur toute la hauteur de l'assemblage. Une perche commandée manuellement du bord de la piscine imprimant un mouvement de rotation à la tige 95 de la pignonnerie permet de faire tourner l'assemblage et la petite branche 39 du tourniquet. Ce mouvement peut être motorisé et contrôlé par un moyen de mesure en rotation.

Dans l'exemple de réalisation décrit, les moyens d'examen comportent une caméra. On peut déplacer cette caméra parallèlement à son axe optique selon les axes xyz. Le champ observé par la caméra, considéré comme délimité par les positions extrêmes données à l'axe optique, couvre au minimum la face verticale de l'assemblage 83 ainsi que les deux dispositifs de mesure direct et indirect qui lui sont juxtaposés. Un tableau de commande du chariot porte-caméra regroupe les commandes de déplacement selon les trois axes x, y et z, le choix de la vitesse et du sens de déplacement, les trois compteurs de déplacement calés sur chacun des mouvements x, y et z.

Les moyens de mesure directe disposés verticalement sont constitués par une échelle millimétrique graduée et par un crayon étalon de 10 mm de diamètre, fixés sur les tubes des structures 9 situés face à la caméra. Ces deux éléments ont la longueur et la disposition nécessaires pour couvrir en hauteur tous les niveaux de l'assemblage combustible 83. Les déplacements de la caméra sont visualisés sur une console avec l'affichage des valeurs des codeurs numériques. Les valeurs lues à l'écran sur les deux règles graduées fixées sur les membrures ne servent que de repère et de contrôle de même que celles lues directement sur une bande graduée collée à l'écran de la console ou grâce à un réticule gradué apparaissant sur l'écran au moyen d'un dispositif électronique. En métrologie verticale, la mesure se fait à partir d'un repère qui est le fond du pot tournant alors qu'en métrologie horizontale la référence est l'une des génératrices du crayon étalon fixé sur les règles graduées. Dans la phase initiale de la mesure, l'une des branches du réticule croisé apparaissant à l'écran doit se confondre avec la ligne de référence choisie.

L'appareil d'examen permet deux moyens de métrologie verticale, la métrologie verticale directe et indirecte. En métrologie verticale directe, la caméra est déplacée verticalement jusqu'à coïncidence sur l'écran du bord supérieur de la bande graduée et collée sur l'écran ou du réticule. Cette bande est graduée en demi-millimètre. Son bord supérieur matérialise sur l'écran la trace du plan horizontal passant par l'axe optique de la caméra. Cette trace passe sensiblement par le centre de l'écran. Son calage en coïncidence avec l'horizontale de référence de l'appareil est obtenu en se référant à des repères adaptés tracés sur le support d'assemblage dans le champ couvert par la caméra. La caméra est déplacée verticalement jusqu'à coïncidence sur l'écran du bord supérieur de la bande graduée et de la référence choisie (bord supérieur de la pièce d'extrémité inférieure, extrémité inférieure d'un crayon combustible 93...). On note en regard dudit bord supérieur la cote verticale indiquée par la règle. La caméra est déplacée verticalement pour aligner sur l'écran le bord supérieur de la bande et la seconde référence choisie (bord inférieur de la pièce d'extrémité supérieure, extrémité supérieure du crayon considéré). On note dans les mêmes conditions la nouvelle cote. La différence entre les deux cotes notées donne directement en millimètres la longueur du composant considéré.

En métrologie verticale indirecte, on procède comme en métrologie verticale directe à cette différence qu'au lieu de noter l'indication fournie par la règle sur l'écran, on note les deux indications correspondantes fournies par le compteur de déplacement associé au déplacement vertical de la caméra. La différence de ces deux indications multipliée par un coefficient propre à la chaîne cinématique du déplacement vertical de la caméra donne la cote verticale recherchée.

La métrologie horizontale concerne pincipale- ment la mesure de la distance entre deux crayons combustibles. Après avoir suffisamment approché la caméra de l'assemblage combustible pour obtenir par exemple la couverture par la caméra de trois ou quatre crayons, on déplace horizontalement la caméra pour placer l'image du crayon étalon sensiblement au milieu de l'écran. La distance apparente sur l'écran des deux génératrices du crayon rapportée à l'échelle graduée de l'écran permet l'étalonnage de cette dernière.

En ramenant la caméra de façon à amener l'axe du canal considéré sensiblement au centre de l'écran, il est possible de mesurer la cote dudit canal par référence au réticule gradué de l'écran de la console. En photographiant l'écran et le réticule gradué, on obtient une métrologie sur photographie du canal considéré.

Le système du chariot 15 qui porte les moyens d'examen, bien que de conception simple, prend toute son importance lorsqu'on rappelle que la machine d'examen est amenée à fonctionner uniquement immergée sous l'eau. Il lui confère une grande souplesse d'utilisation des moyens d'examen. La console 19 n'assurant qu'une fonction de déplacement vertical diminue les erreurs éventuelles sur le positionnement des moyens d'examen. Une marge de déplacement longitudinal plus importante est autorisée. Elle n'est limitée que par la longueur des rails. On a donc la possibilité avec un recul suffisant d'examiner l'assemblage combustible en entier, de le photographier avec son numéro, d'observer l'arcure des crayons combustibles, etc... On peut adapter différents dispositifs de mesure spécifiques avec des appareillages tels qu'un dispositif de mesure à ultrasons par laser, par courant de Foucault et éventuellement d'usinage.

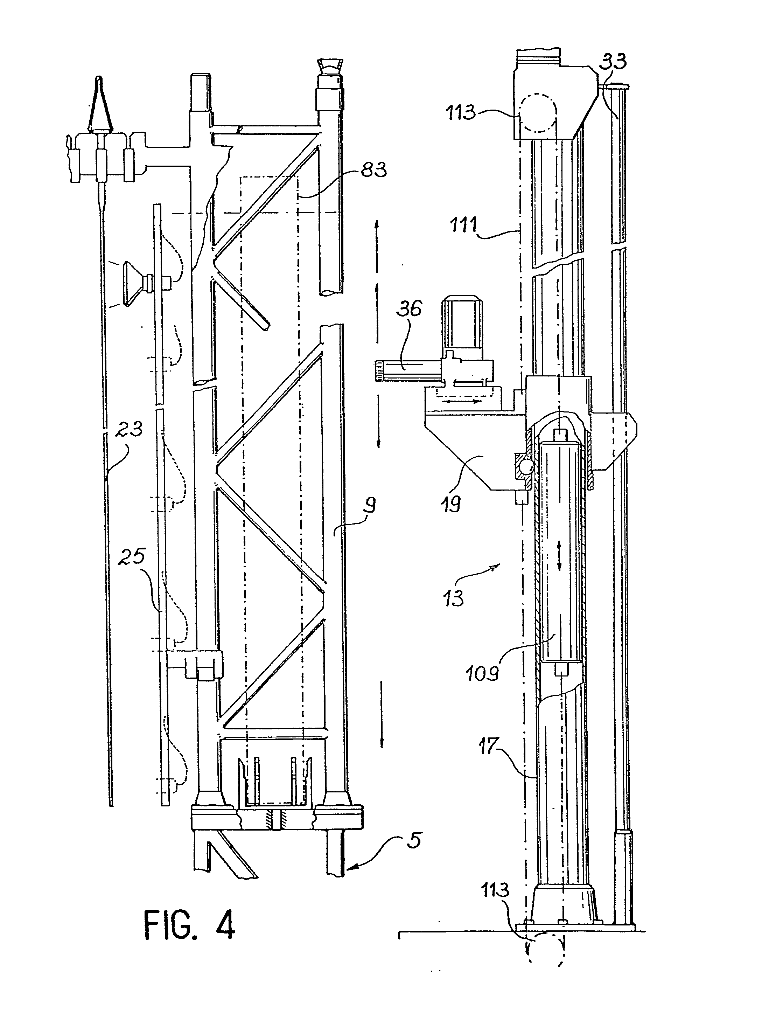

On a représenté sur la fig. 4 une vue latérale de ma machine d'examen de l'invention. Une vue, partiellement en coupe, de la colonne 17 montre un contrepoids 109, disposé à l'intérieur de cette dernière, et qui équilibre le poids de la console 19 et des moyens d'examen. Un cable 111, passant sur une poulie 113, relie la console 19 au contrepoids 109.

Par ailleurs, la fig. 4 montre l'écran 23 et une des deux rampes d'éclairage 25.

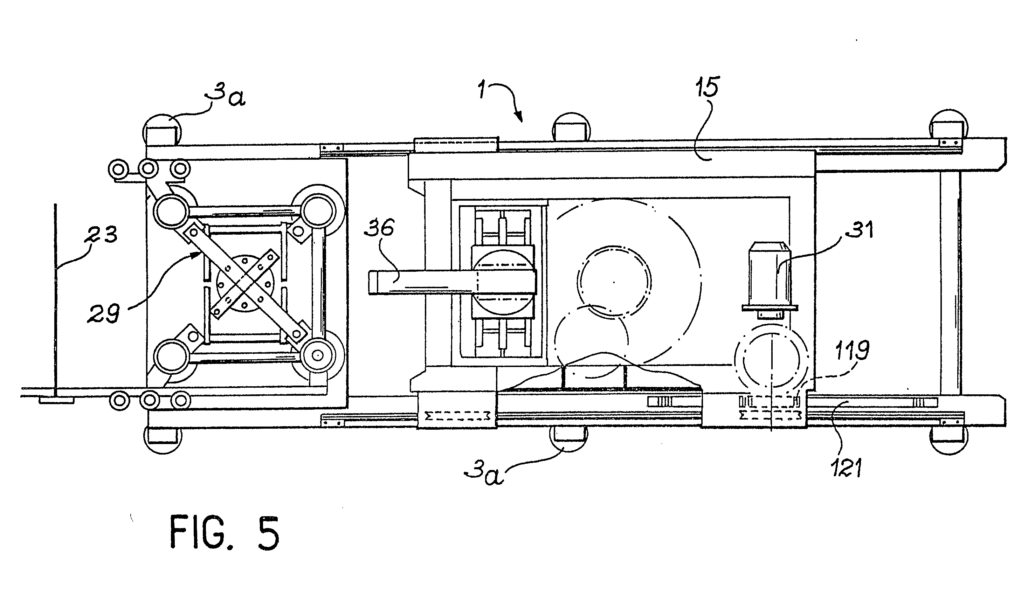

On a représenté sur la fig. 5 une vue de dessus de la machine d'examen de l'invention. Cette figure permet d'apprécier, en particulier, la commande du déplacement longitudinal du chariot 15. Le moteur 31 fixé sur ce dernier, entraîne un pignon 119 en prise avec une crémaillère 121, ce qui permet d'approcher ou d'éloigner à volonté le chariot et par suite la caméra 36 de l'assemblage à examiner.

## Revendications

1. Machine d'examen pour assemblage combustible de réacteur nucléaire comportant un platelage (3), des moyens de support (5, 7,9, 11, 12) pour un assemblage à examiner, ces moyens de support maintenant ledit assemblage en position verticale, des moyens d'examen (36) de l'assemblage, et des moyens pour déplacer lesdits moyens d'examen (36), lesdits moyens de déplacement des moyens d'examen comprenant une colonne (17) s'étendant verticalement et reposant sur le platelage (3), ladite colonne (17) portant une console (19) déplaçable verticalement le long de la colonne (17), ladite console (19) supportant un chariot (21) déplaçable transversalement par rapport à la console (19), caractérisée en ce que ladite colonne (17) est solidaire d'un chariot (15) qui est déplaçable sur ledit platelage (3), ce qui permet d'éloigner ou de rapprocher la colonne (17) de l'assemblage à examiner.

2. Machine d'examen pour assemblage combustible de réacteur nucléaire comportant un platelage (3), des moyens de support (5, 7, 9, 11, 12) pour un assemblage à examiner, ces moyens de support maintenant ledit assemblage en position verticale, des moyens d'examen (36) de l'assemblage, et des moyens pour déplacer lesdits moyens d'examens, une chaise (5) située à une extrémité du platelage, un pot tournant autour de son axe vertical recevant l'assemblage, deux structures rigides (9) qui sont disposées verticalement et parallèlement sur la chaise (5), chacune desdites structures ayant une extrémité inférieure et une extrémité supérieure, les structures reposant sur la chaise par leur extrémité inférieure, des moyens de liaison (11) étant prévus entre l'extrémité supérieure desdites structures, caractérisée par un tourniquet (29) situé à la partie supérieure desdites structures rigides, ce tourniquet comportant une grande branche (37) et une petite branche (39), la petite branche (39) étant montée de manière pivotante sur la grande branche (37), deux broches (45) situées chacune à une extrémité de la grande branche (37), deux broches (49) situées chacune à une extrémité de la petite branche (39), un bloc de fixation comportant un orifice destiné à recevoir une broche (45) de la grande branche étant prévu à la partie supérieure de chacune des structures rigides, un disque (55) solidaire de la petite branche (39) comportant des trous (57) répartis à des positions caractéristiques, un dispositif (59) d'immobilisation en rotation de la petite branche (39) par rapport à la grande branche (37).

3. Machine d'examen selon la revendication 2, caractérisée en ce que chacune desdites structures rigides (9) est constituée par deux tubes parallèles reliés par une structure triangulée, l'un des tubes de l'une desdites structures comportant un cône de centrage à son extrémité supérieure, une tige étant située à l'intérieur dudit tube de ladite structure latérale (9), ladite tige comportant à son extrémité supérieure un embout d'entraînement et à son extrémité inférieure une pignonerie qui entraîne une roue dentée solidaire du pot tournant (7).

4. Machine d'examen selon la revendication 2, caractérisée en ce que le dispositif (59) d'immobilisation en rotation de la petite branche (39) par rapport à la grande branche (37) est constitué par une tige (61) possédant une extrémité de plus grand diamètre (63) terminée par une partie conique (69), la tige (61) étant logée à l'intérieur d'un tube (67) fermé par un bouchon (75), un ressort (65) rappelant la tige (61) vers le bas, la partie (63) de plus grand diamètre s'engageant dans les orifices (57) du disque (55) pour immobiliser en rotation la branche (39) par rapport à la branche (37).

5. Machine d'examen selon la revendication 2, caractérisée en ce qu'elle comporte une plaque, présentant un poids égal à l'action de la plaque supérieure de cœur, ladite plaque reposant sur les ressorts (88) de l'assemblage combustible, une fois le tourniquet (29) retiré et, permettant de mesurer la flèche des ressorts grâce à des moyens de mesure (107) en simulant leur écrasement tel qu'il se produit en réacteur nucléaire.

## Patentansprüche

1. Prüfstand für Reaktorbrennelemente mit einem Bodenelement (3), Haltemitteln (5, 7, 9, 11, 12) für ein zu überprüfendes Element, wobei diese Haltemittel das Element in senkrechter Stellung halten, Prüfmitteln (36) für das Element und Mitteln zum Verschieben der Prüfmittel (36), wobei die Mittel zum Verschieben der Prüfmittel eine auf dem Bodenelement (3) ruhende und sich senkrecht erstreckende Säule (17) umfassen, die einen längs der Säule (17) senkrecht bewegbaren Träger (19) trägt, der einen in bezug auf die Säule (19) quer bewegbaren Wagen (21) trägt, dadurch gekennzeichnet, dass die Säule (17) fest mit einem Wagen (15) verbunden ist, der auf dem Bodenelement (3) verschiebbar ist, was ermöglicht, die Säule (17) von dem zu überprüfenden Element zu entfernen oder diesem anzunähern.

2. Prüfstand für Reaktorbrennelemente mit einem Bodenelement (3), Haltemitteln (5, 7, 9, 11, 12) für ein zu überprüfendes Element, wobei diese Haltemittel das Element in vertikaler Stellung halten, Prüfmitteln (36) für das Element und Mitteln, um die Prüfmittel zu bewegen, einem sich an einem Ende des Bodenelementes befindenden Bock (5), einem sich um seine vertikale Achse drehenden Topf, der das Element aufnimmt, zwei steifen Strukturen (9), die senkrecht und parallel auf dem Bock (5) angeordnet sind und von denen jede ein unteres und ein oberes Ende aufweist, wobei die Strukturen mit ihrem unteren Ende auf dem Bock ruhen, sowie mit zwischen den oberen Enden der Strukturen vorgesehenen Verbindungsmitteln (11), gekennzeichnet durch ein sich am oberen Teil der steifen Strukturen befindendes Drehkreuz (29), welches einen grossen Arm (37) und einen kleinen Arm (39) aufweist, wobei der kleine Arm (39) verschwenkbar an dem grossen Arm (37) angebracht ist, durch zwei sich jeweils an einem Ende des grossen Arms (37) befindende Dorne (45), durch zwei sich jeweils an einem Ende des kleinen Arms (39) befindende Dorne (49), durch einen an dem oberen Teil jeder der steifen Strukturen vorgesehenen Befestigungsblock mit einer zur Aufnahme eines Dorns (45) des grossen Arms bestimmten Öffnung, durch eine fest mit dem kleinen Arm verbundene Scheibe (45), die auf charakteristische Stellen verteilte Löcher (57) aufweist, eine Feststellvorrichtung (59) für die Drehung des kleinen Arms (39) in bezug auf den grossen Arm (37).

3. Prüfstand nach Anspruch 2, dadurch gekennzeichnet, dass jede der zwei steifen Strukturen (9) von zwei parallelen, durch eine Dreieckstruktur verbundene Rohre gebildet ist, wobei eines der Rohre einer der Strukturen an seinem oberen Ende einen Zentrierkonus aufweist, sich im Inneren des Rohrs der seitlichen Struktur (9) eine Stange befindet, die an ihrem oberen Ende einen Antriebsansatz und an ihrem unteren Ende einen Ritzeltrieb aufweist, der ein fest mit dem Drehtopf (7) verbundenes Zahnrad antreibt.

4. Prüfstand nach Anspruch 2, dadurch gekennzeichnet, dass die Feststellvorrichtung (59) für die Drehung des kleinen Arms (39) in bezug auf den grossen Arm (37) von einer Stange (61), die ein mit einem konischen Abschnitt (69) endendes Ende mit grösserem Durchmesser (53) aufweist, gebildet ist, wobei die Stange (61) im Inneren eines mit einem Stopfen (75) verschlossenen Rohrs (67) untergebracht ist, eine Feder (65) die Stange (61) nach unten zurückzieht, der Abschnitt (63) mit grösserem Durchmesser in die Öffnungen (57) der Scheibe (55) eingreift, um den Arm (39) drehmässig in bezug auf den Arm (37) zu arretieren.

5. Prüfstand nach Anspruch 2, dadurch gekennzeichnet, dass dieser eine Platte umfasst, die das gleiche Gewicht wie die Wirkung der oberen Platte des Kerns aufweist, die Platte auf den Federn (88) des Brennelements ruht, wenn das Drehkreuz (29) zurückgezogen ist, und ermöglicht, die Auslenkung der Federn mit Hilfe von Messeinrichtungen (107) zu messen, indem deren Zusammendrücken nachgebildet wird, wie es sich beim Kernreaktor ergibt.

## Claims

1. Machine for examining nuclear reactor fuel assemblies incorporating a flooring (3), support means (5, 7, 9, 11, 12) for an assembly to be examined, said support means keeping the assembly in the vertical position, means (36) for examining the assembly and means for displacing the examination means (36), said displacement means incorporating a vertically extending column (17) and resting on said flooring (3), said column (17) carrying a bracket (19) which is vertically displaceable along the column (17), the bracket (19) supporting a carriage (21) which is transversely displaceable with respect to the bracket (19), characterized in that said column (17) is fixed to a trolley (15) displaceable on the flooring (3), which makes it possible to move the column (17) towards or away from the assembly to be examined.

2. Machine for examining nuclear reactor fuel assemblies incorporating a flooring (3), support means (5, 7, 9, 11, 12) for an assembly to be examined, said support means securing said assembly in the vertical position, means (36) for examining the assembly and means for displacing said examination means, a support (5) located at one end of the flooring, a container rotating about its vertical axis receiving the assembly, wherein two rigid structures (9) are arranged in vertical and parallel manner on the support (5), each of these structures having an upper end and a lower end, the structures resting on the support by their lower end, connection means (11) being provided between the upper end of said structures, characterized by a latch means (29) located in the upper part of said rigid structures and having a large branch (37) and a small branch (39), the latter being fitted in a pivotable manner on the large branch (37), two pins (45) located at one end of the large branch (37), two pins (49) each located at one end of the small branch (39), a fixing block having an orifice for receiving a pin (45) of the large branch being provided in the upper part of each of the rigid structures, a disk (55) fixed to the small branch (39) having holes (57) at characteristic positions and a device (59) for immobilizing the small branch (39) in rotation relative to the large branch (37).

3. Examination machine according to claim 2, characterized in that each of the said rigid structures (9) is constituted by two parallel tubes connected by a triangular structure, one of the tubes of one of these structures having a centring cone at its upper end, a bar being located within the said tube of the lateral structure (9), said bar having at its upper end a displacement end fitting and at its lower end a pinion system driving a toothed wheel integral with the rotary container (7).

4. Examination machine according to claim 2, characterized in that the device (59) for immobilizing the small branch (39) in rotation relative to the large branch (37) is constituted by a bar (61) having a large diameter end (63) terminated by a conical part (69), the bar (61) being located within a tube (67) closed by a plug (75) a spring (65) which returns the bar (61) downwards, the larger diameter part (63) engaging in orifices (57) of the disk (55) for immobilizing the small branch (39) in rotation relative to the large branch (37).

5. Examination means according to claim 2, characterized in that it comprises a plate with a weight equal to the action of the upper plate of the core, said plate resting on the springs (88) of the fuel assembly once the latch means (29) has been removed and making it possible to measure the sag of the springs due to the measuring means (107), by simulating their compression as is produced in a nuclear reactor.

FIG. 1

0 123 597

FIG. 2

11

FIG. 3

0 123 597

FIG. 4

FIG. 5